# EUROPEAN PATENT APPLICATION

(11) **EP 1 992 840 A1**
(43) Date of publication of application: **19.11.2008**
(21) Application number: 07251973.9
(22) Date of filing: 14.05.2007
(51) Int. Cl.: F16H 3/72, H02K 7/10, H02K 7/116

(54) **Drive pulleys**

(71) Applicant: Nexxtdrive Limited, London WC2N 5HR (GB)
(72) Inventor: Moeller, Frank H., Milford, Staffor ST17 0UN (GB)
(74) Representative: Jennings, Nigel Robin

(57) **Abstract**

A drive pulley, particularly for automotive auxiliary equipment, includes an input (12;56) for connection to an engine and an output (37;48), one of the input and the output comprising a hollow cylindrical member (38;68), whose outer surface constitutes a pulley belt engagement surface. The input and output are connected by a transmission system including an epicyclic gearset comprising two or more planet gears (10;52), which are carried by respective planet shafts (8;50) and are in mesh with a sun gear (6;58) and with an annulus gear (12;56). The planet shafts are connected to a common carrier (37;48). The input is connected to the annulus gear (12;56) and the output is connected to the carrier (37;48). The transmission system further includes two electric motor/generators, the rotors (17;62) of which are connected to the output and the sun gear, respectively, the electrical connections of the stators (16;64) of which are connected to a controller arranged selectively to control the flow of electrical power between them. The transmission is at least partially accommodated within the hollow cylindrical member (38;68). At least one of the motor/generators is remote from the hollow cylindrical member (38;68).

## Description

The present invention relates to drive pulleys for automotive and internal combustion engine auxiliary equipment, such as cooling fans, oil pumps, air conditioning pumps and the like and is concerned with that type of drive pulley which includes an input for connection to an engine and an output, one of the input and output comprising a hollow cylindrical member, whose outer surface constitutes a pulley belt engagement surface, the input and output being connected by a transmission system including an epicyclic gearset comprising two or more planet gears, which are carried by respective planet shafts to rotate about the axis thereof and are in mesh with the sun gear and with a further component, the planet shafts being connected to a common carrier, the input and output being connected to a respective one of the carrier and the further component, the transmission system further including two electric motor/generators, the rotors of which are connected to the output and the sun gear, respectively, the electrical stator connections of which are connected to a controller arranged selectively to control the flow of electrical power between them, the transmission being at least partially accommodated within the hollow cylindrical member.

Such a drive pulley is disclosed in WO 2005/119023. The prior pulley comprises two motor/generators and an epicyclic gearset integrated into a single unit. It is therefore relatively bulky and long and thus only a proportion of it can be accommodated within the hollow cylindrical member. The two motor/generators are of radial flux type, that is to say each rotor is spaced from the associated stator in the radial direction with respect to the axis of rotation of the sun gear, and are spaced apart in the axial direction. This further adds to the axial length of the pulley. The gearset in the prior pulley includes two sets of planet gears in mesh with respective sun gears, which are spaced apart in the axial direction. The provision of the axially spaced sun gears further increases to the overall length of the prior pulley. The prior pulley includes a central rotary shaft which is connected to rotate with the hollow cylindrical member affording the pulley belt engagement surface and with one of the sun gears. The most effective way to retain a rotary shaft reliably in position and maintain its stability is to provide it with at least two axially spaced radial bearings situated between the outer surface of the shaft and a fixed structure. The necessity of providing two spaced support bearings and the two necessary spaced portions of a fixed structure for each rotary shaft in the prior pulley yet further contributes to its length in the axial direction.

The engine compartment space available in modern motor vehicles is extremely limited and very great efforts are currently being made to reduce the volume of the components and sub-assemblies of automotive engines. One location where automotive drive pulleys are very commonly used is connected to the end of the engine crankshaft. With the increasing use of more powerful engines and complex sub-systems, such as hybrid drive systems, stop-start systems, increased generation capacity and climate control systems, there is an increasing premium on space in the engine compartment of all types of vehicle and stationary engines. This is exacerbated by the fact that an increasing proportion of motor cars have a transversely mounted engine at the front of the car and in this event the length of the engine tends to be only slightly less that the transverse dimension of the engine compartment of the vehicle. Adding a drive pulley at the end of the crankshaft does of course add to the overall length of the engine and it is found in practice that, at least in certain applications, the prior pulley has an axial length which renders it unacceptable.

If the drive pulley is provided on the end of a vehicle crankshaft, the pulley belt engagement surface will be part of the pulley output and the crankshaft will be connected to the input. However, drive pulleys are also connected to engine auxiliary equipment, such as oil pumps and air conditioning compressors, and in this case the pulley belt engagement surface is part of the pulley input and the output is connected to the shaft of the compressor or the like. Axial space is frequently extremely restricted in this rea of the engine compartment also.

WO 2007/03970 discloses a driven hub for a vehicle wheel including a cylindrical hub member, which is mounted to rotate about its axis and, in use, carries a vehicle tyre. Mounted within the hub member is a transmission system with an input, which is mounted to rotate about the axis, and an output, which is connected to rotate with the hub member. The transmission system includes an epicyclic gearset comprising a sun gear connected to rotate with the input, one or more planet gears, which are rotatably carried by a common carrier and are in mesh with the sun gear, and an annulus gear in mesh with the planet gears. The transmission system also includes a first motor/generator connected to rotate with one of the carrier and the ring gear, the other of which is connected to rotate with the hub member. When installed on a vehicle, the stator connections of the first motor/generator are connected to the stator connections of a second motor/generator via a controller arranged to control the flow of electrical power between the two motor/generators. The output shaft of the vehicle engine is connected to the rotor of the second motor/generator. This prior document is of course concerned with a driven wheel hub rather than a drive pulley and the considerations for these two assemblies are very different. Thus an automotive pulley for driving auxiliary devices will have a significantly higher maximum required output speed than a wheel hub and the output torque required from a wheel hub is substantially greater than that required from a drive pulley. The sun gear of a three element epicyclic gearset will be the fastest rotating element and it was therefore absolutely necessary in the prior hub to connect the input to the sun gear. Thus the fact that this gear rotates the fastest means that the torque to which it is subjected is relatively low and this means that the drive shaft extending to it and the associated mechanical components can be relatively small and thus light. Furthermore, axial space is not at such a premium in a driven automotive wheel hub as it is in a drive pulley for auxiliary devices. The reason why one motor/generator was situated remote from the epicyclic gearset in the prior hub, was firstly to enable it to be situated as close as possible to the vehicle engine, which is desirable because very significant mechanical power is transmitted to it, at least at certain times, and secondly to enable the motor/generator in question to be common to two driven hubs, thereby saving on the cost and weight of one motor/generator.

It is therefore the object of the present invention to provide a drive pulley of the type referred to above which has a significantly reduced axial length by comparison with the pulley disclosed in WO 2005/229023 thereby rendering it possible to connect the pulley to the end of the crankshaft of a transversely mounted automotive engine or any other engine that encounters space limitations in the engine compartment.

The pulley in accordance with the invention is characterised in that the further component is an annulus gear, that the input is connected to the annulus gear and the output is connected to the carrier, that at least one of the motor/generators is remote from the hollow cylindrical member and that the gearset is at least partially accommodated within the hollow cylindrical member.

Thus in the pulley in accordance with the present invention, the epicyclic gearset no longer includes two axially spaced sun gears but instead includes only a single sun gear and the further component with which the planet gears are in mesh is now an annulus gear, which extends annually around the planet gears and the sun gear. The omission of the second sun gear inherently results in a reduction in the axial length of the transmission system. In the pulley disclosed in the prior document, the epicyclic gearset and the two motor/generators are integrated into a single unit but in the pulley in accordance with the present invention, at least one of the motor/generator units is remote from the hollow cylindrical member. This means that the unit which is to be connected e.g. to the end of an automotive engine crankshaft will comprise the epicyclic gearset and at most one motor/generator. This will result in a further reduction in the axial length of the unit. The motor/generator which is no longer integrated with the pulley wheel, but still constitutes a part of the transmission system, may be accommodated at any convenient location within the engine compartment of a motor vehicle. Its rotor is, however, still mechanically connected to the output of the transmission system so as to rotate with it. In the prior pulley, the two motor/generators are partially accommodated within the hollow cylindrical member but since they take up all the space that is available, the epicyclic gearset is situated outside the hollow cylindrical member. However, the reduction in length caused by the omission of one of the sun gears and by moving at least one of the motor/generators to a position remote from the hollow cylindrical member results in the gearset now being able to be at least partially accommodated within the hollow cylindrical member. The pulley unit to be attached e.g. to the end of the crankshaft of a transversely mounted automotive engine now has a significantly reduced axial length and this reduction is in practice sufficient to enable the combined length of the automotive engine and the pulley unit (without at least one of the motor/generators) to be accommodated in the engine compartment of many vehicles.

In one embodiment, in which only one of the motor/generators is remote from the hollow cylindrical member and the other motor/generator is integrated with the epicyclic gearset, it is preferred that the other motor/generator is of axial flux type, whereby its rotor is spaced from its stator in the direction of the axis of rotation of the sun gear, and is at least partially accommodated within the hollow cylindrical member. Axial flux electric machines typically have a shorter axial length than radial flux machines and this further contributes to the reduction in the axial length of the pulley unit to be connected to the end of an automotive crankshaft.

In a further embodiment, both of the motor/generators are remote from the hollow cylindrical member and this permits the gearset to be substantially wholly contained within the hollow cylindrical member.

In one embodiment of the invention, the hollow cylindrical member forms part of the output. In this event, the pulley will be used to transmit drive to some further pulley and this embodiment is therefore suitable for pulleys to be connected to e.g. the crankshaft of an engine.

An epicyclic gearset comprising two linked sets of planet gears in mesh with respective sun gears has no retaining or bearing effect but a further preferred embodiment of the present invention takes advantage of the fact that an epicyclic gearset in which the planet gears are in mesh with an annulus gear does have a retaining effect on the carrier, and thus acts as a radial support bearing for it. Thus in this embodiment of the invention, the carrier is supported by only one annular bearing situated between it and a fixed structureand the annulus gear fulfils the function of a second support bearing. Thus the carrier still has two axially spaced regions at which is it supported but in the present invention only one of these constitutes a conventional annular bearing and the other is constituted by the annulus gear. The omission of an annular support bearing for the carrier and of the necessity of providing a second portion of the fixed structure with which this second bearing cooperates results in yet a further reduction in the overall axial length of the pulley unit to be attached e.g. to the crankshaft of an automotive engine. This feature of the invention is based on the recognition that the annulus gear is connected to the crankshaft, which is a relatively massive shaft supported by its own bearings. The annulus gear, and thus also the carrier/pulley member, are thus effectively supported by the crankshaft bearings, thereby rendering a second conventional bearing for the carrier unnecessary.

In a further embodiment of the invention, the hollow cylindrical member forms part of the input. In this event, the pulley will be used to receive drive from some further pulley and this embodiment is therefore suitable for pulleys to be connected to some automotive auxiliary device, such as an air conditioning compressor. In this event, the carrier will constitute the output and will be connected to the shaft of the auxiliary device. In this event, the retaining effect of the gearset is again taken advantage of in a preferred embodiment of the invention in which the annulus gear is supported by a single annular bearing between it and a fixed structure and the planet gears fulfil the function of a second support bearing.

If the pulley is to be connected directly to an auxiliary device, that is to say not via a pulley belt, this opens up the possibility of integrating the pulley with the auxiliary device and providing them as a single integrated unit. Automotive air conditioning compressors typically include a controllable clutch which is responsive to signals indicative of the thermostat setting and of the temperature of the interior of the vehicle such that the clutch is engaged and the compressor thus operative only when cooling operation is required. The pulley of the present invention will fulfil the function of the conventional clutch and may thus replace it.

The invention therefore also embraces an automotive air conditioning compressor including an input shaft connected to the carrier of a pulley of the type referred to above. The compressor preferably also includes a further hollow cylindrical member, the outer surface of which constitutes a further pulley belt engagement surface and which is connected to rotate with the carrier. This further pulley member will be connected, when in situ in a vehicle, by means of a pulley belt to the rotor of one of the motor/generators and also, if required, to the pulleys of one or more further auxiliary devices, such as an oil pump and/or a water pump.

The operation of the drive pulley in accordance with the invention is substantially the same as that described in the prior document referred to above. Thus, in use, one of the motor/generators generally acts as a generator and transmits electrical power to the other motor/generator, which acts as a motor. The amount of electrical power so transmitted may be selectively varied by means of the controller, thereby altering the transmission ratio of the transmission system. Power is thus transmitted through the transmission system both mechanically and electrically, in a proportion which varies with the varying transmission ratio. The output speed of the transmission system may thus be varied independently of the input speed, which means that the speed of any FEAD ("front end accessory device") such as a water pump, air conditioning compressor or the like driven by the pulley in accordance with the invention may be varied independently of the speed of the engine, which means in turn that it may be operated at a speed which is much closer to the optimum for the instantaneous requirements of the auxiliary devices being driven by the engine. Thus, for instance, at low engine speed, an air conditioning compressor powered by the pulley may be driven at high speed. Conversely, at high engine speed, the auxiliary equipment may, if appropriate, be operated at relatively low speed, whereby power is thus not needlessly consumed and the overall efficiency of the engine is increased.

Further features of details of the invention will be apparent from the following description of three specific embodiments in accordance with the invention, which is given by way of example only with reference to the accompanying drawings, in which:
Figure 1 is a diagrammatic axial section view of an automotive drive pulley in accordance with the invention for connection to the crank shaft of a transversely mounted automotive engine;
Figure 2 is a view similar to figure 1 of a second embodiment;
Figure 3 is a diagrammatic end view of the pulley shown in figure 1, which additionally shows the remote motor/generator;
Figure 4 is a view similar to figure 3 but shows the pulley of figure 2 and the two remote motor/generators; and
Figure 5 is a diagrammatic axial sectional view of part of an automotive air conditioning compressor integrated with a pulley of the type shown in Figures 1 and 3.

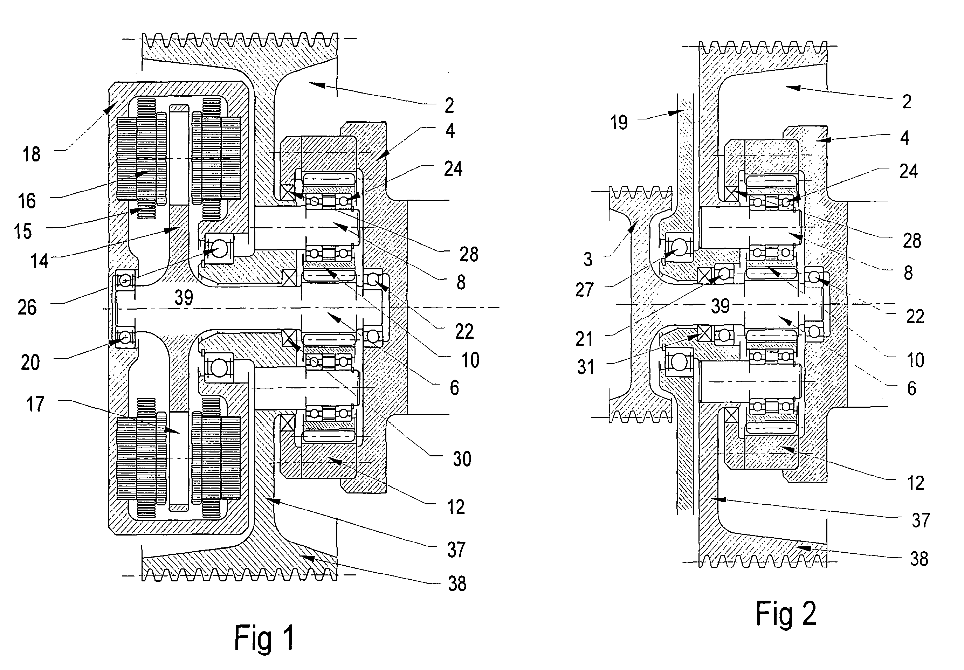

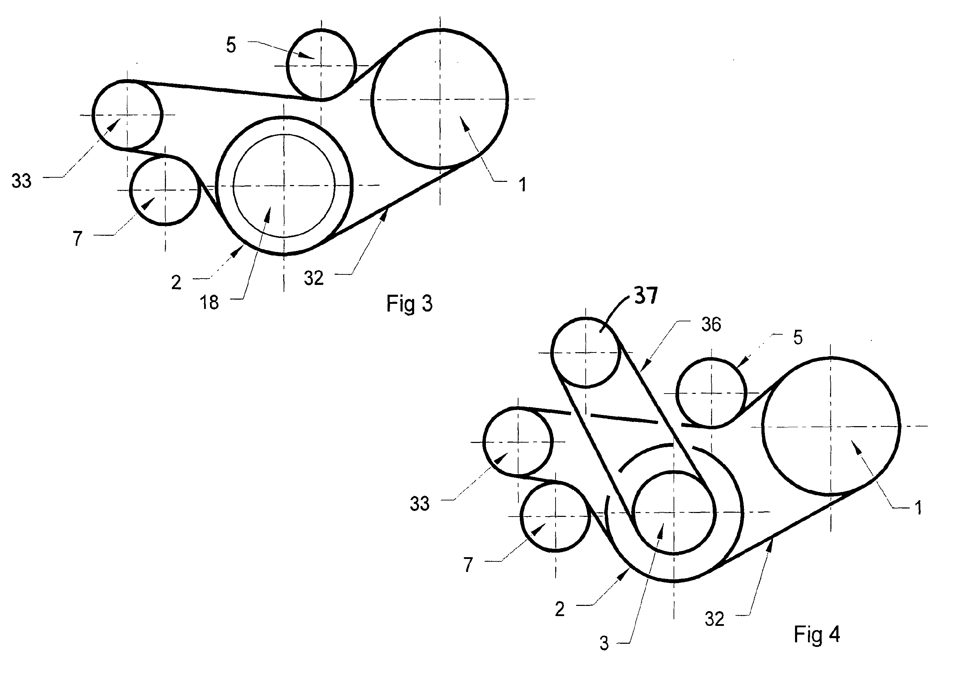

Referring firstly to figures 1 and 3, the illustrated pulley is shown connected to the end of the crankshaft 4 of a transversely mounted engine of a front-engine motorvehicle. The crankshaft 4 is connected to the input of a transmission system comprising a epicyclic gearset, the output of which is connected to a pulley member 2 comprising a radial web 37, connected to the free edge of which is a hollow cylindrical member 38, the circular section external surface of which affords a plurality of V-shaped grooves and constitutes the belt-engaging surface of a multi-V pulley.

The epicyclic gearset includes a sun gear 6 which constitutes an enlarged portion of a central rotary shaft 39. The sun gear is in mesh with two or more planet gears 10 which are mounted on respective planet shafts 8 with the interposition of respective bearings 24 so as to be rotatable with respect to the planet shafts. The planet gears 10 are also in mesh with an internally toothed annulus gear 12. The annulus gear 12 constitutes the input and is connected, in use, to one end of the crankshaft 4 of an automotive engine. The planet shafts 8 are connected to the web 37 of the pulley member 2, which thus constitutes a common planet carrier. The pulley member 2 carries an axial flange which is spaced from a portion of the annulus gear 12 and sealed with respect to it by means of a shaft seal 28. The pulley member 2 has a central bore through which the sun shaft 39 passes and is sealed with respect to the sun shaft by a further shaft seal 30. The pulley member 2 is mounted to rotate with respect to the stationary portion 18 of the pulley by way of a single bearing 26. It is, however, also supported by the annulus gear via the planet gears 10 and their bearings 24. The annulus gear is in turn effectively supported by the crankshaft bearings.

The central shaft 39 carries an annular flange 14, which constitutes the rotor of a first electric motor/generator and carried on the outer portion of which is a plurality of permanent magnets 17. The magnets 17 are received in the annular gap defined between two stator poles 16, each of which includes copper windings 15. The motor/generator is therefore of axial flux type.

As seen in figure 3, the belt-engaging surface of the pulley member 2 is engaged by a pulley belt 32 which extends in a continuous loop in engagement with two further pulley wheels 1 and 7, constituting part of respective auxiliary devices, such as an air conditioning compressor and a water pump. The pulley belt 32 is maintained at the desired tension by a tension pulley 5. The pulley belt also passes around a further pulley 33 connected to the rotor of a second electric motor/generator.

The central shaft 39 of the pulley unit is supported at one end on the stationary structure 18, to which the stator 16 of the first motor/generator is connected, by means of a bearing 20. It is supported at the other end by a bearing 22 which bears on the crankshaft 4 of the engine.

The stator connections of the two motor/generators are connected to a controller, to which an electric battery is also connected. These components are not illustrated in the drawings but are essentially the same as in the prior document referred to above.

In use, rotation of the crankshaft 4 will result in rotation of the pulley member 2 at a speed which may be independent of the speed of the crankshaft but is dependent on the controller, specifically on the amount of power permitted by the controller to be transmitted from one of the motor/generators, which operates as a generator, to the other of the motor/generators, which acts as a motor. The controller will respond to one or more signals received from temperature sensors or the like, depending on the precise nature of the auxiliary devices to be driven.

The modified embodiment shown in figures 2 and 4 is very similar to that illustrated in figures 1 and 3 and differs from it in only a few respects. The most important distinction is that in this case both of the motor/generators are remote from the pulley member 2. This permits the entire epicyclic gearset to be accommodated within the pulley member. The central shaft 39 of the pulley unit does not carry the rotor 14, 17 of the first motor/generator unit but instead carries a further pulley wheel 3. As may be seen in figure 4, the pulley wheel 3 is connected by a further belt 36 to a pulley wheel 37 connected to the rotor of the first motor/generator. The second motor/generator is connected by a belt 32 to the pulley member 2 as before.

The pulley unit shown in figure 2 includes a fixed structure 19 with an aperture, in which the pulley member 2 is mounted to rotate by means of a bearing 27. The inner surface of the pulley member 2 is sealed with respect to the central shaft by a shaft seal 31. The function of a second bearing spaced from the bearing 27 is again fulfilled by the epicyclic gearset, specifically the annulus gear connected to the crankshaft. The operation of embodiments 2 and 4 is the same as that of figure 1 and 3 but it will be appreciated that the axial length of the pulley unit shown in figure 2 is less than that of the unit shown in figure 1, due to the movement of the first motor/generator to a remote position and the embodiment of figures 2 and 4 may therefore be more appropriate in circumstances in which the space available is particularly restricted.

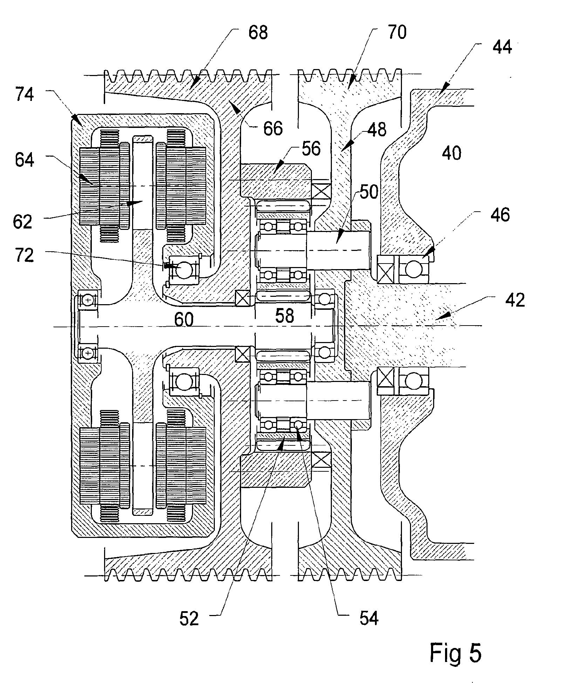

Figure 5 shows part of an automotive air conditioning compressor 40 integrated with a pulley of the type shown in Figures 1 and 3. The intput shaft 42 of the compressor is mounted to rotate with respect to the outer casing 44 by means of a bearing 46 and is connected to the carrier 48 of the gearset. The carrier 48 carries a number of planet shafts 50, each of which rotatably carries a respective planet gear 52 by way of a bearing 54. The planet gears 52 are in mesh with an internally toothed annulus gear 56 and with a central sun gear 58. The sun gear 58 forms part of a central sun shaft 60, which again carries the rotor 62 of a first motor/generator which also includes a stator 64. The annulus gear 56 is connected to rotate with the radial web 66 of a first pulley member which also includes an axial annular flange 68, whose outer surface is a pulley belt engaging surface. The carrier 48 also carries an axial annular flange 70 whose outer surface is a further pulley belt engaging surface. The annulus gear 56 and pulley member 66, 68 is supported by a single bearing 72 with respect to a fixed structure 47 but the function of a second support bearing is fulfilled by the epicyclic gearset which is effectively indirectly supported by the bearing 46 of the compressor 40.

The flange 70 is connected by a pulley belt to the rotor of the other motor/generator (not shown) and, if desired, to one or more further axuiliary devices, the speed of which is thus also controlled by the drive pulley. The annular flange 68 is connected, in use, by a further pulley belt to be rotated by the engine. The operation of the drive pulley is substantially as described above.

## Claims

1. A drive pulley, particularly for automotive auxiliary equipment, the pulley including an input for connection to an engine and an output, one of the input and the output comprising a hollow cylindrical member, whose outer surface constitutes a pulley belt engagement surface, the input and output being connected by a transmission system including an epicyclic gearset comprising two or more planet gears, which are carried by respective planet shafts to rotate about the axis thereof and are in mesh with the sun gear and with a further component, the planet shafts being connected to a common carrier, the input and output being connected to a respective one of the carrier and the further component, the transmission system further including two electric motor/generators, the rotors of which are connected to the output and the sun gear, respectively, the electrical stator connections of which are connected to a controller arranged selectively to control the flow of electrical power between them, the transmission being at least partially accommodated within the hollow cylindrical member, **characterised in that** the further component is an annulus gear, that the input is connected to the annulus gear and the output is connected to the carrier, that at least one of the motor/generators is remote from the hollow cylindrical member and that the gearset is at least partially accommodated within the hollow cylindrical member.

2. A pulley as claimed in Claim 1 in which the other motor/generator is of axial flux type, whereby its rotor is spaced from its stator in the direction of the axis of rotation of the sun gear, and is at least partially accommodated within the hollow cylindrical member.

3. A pulley as claimed in Claim 1 in which both of the motor/generators are remote from the hollow cylindrical member and the gearset is substantially wholly contained within the hollow cylindrical member.

4. A pulley as claimed in any one of the preceding claims in which the hollow cylindrical member forms part of the output. ,

5. A pulley as claimed in claim 4 in which the carrier is supported by a single annular bearing situated between it and a fixed structure and the annulus gear fulfils the function of a second support bearing.

6. A pulley as claimed in any one of Claims 1 to 3 in which the hollow cylindrical member forms part of the input.

7. A pulley as claimed in Claim 6 in which the annulus gear is supported by a single annular bearing between it and a fixed structure and the planet gears fulfil the function of a second support bearing.

8. An automotive air conditioning compressor including an input shaft connected to the carrier of a pulley as claimed in Claim 6 or 7.

9. A compressor as claimed in Claim 8 including a further hollow cylindrical member, the outer surface of which constitutes a further pulley belt engagement surface and which is connected to rotate with the carrier.
